# EUROPEAN PATENT APPLICATION

(11) **EP 2 747 094 A1**
(43) Date of publication of application: **25.06.2014**
(21) Application number: 12198995.8
(22) Date of filing: 21.12.2012
(51) Int. Cl.: H01C 7/12, H01F 27/40, H02H 9/04

(54) **Very fast transient overvoltage attenuator**

(71) Applicant: ABB Technology AG, 8050 Zürich (CH)
(72) Inventor: Straumann, Ulrich, 8404 Winterthur (CH); Riechert, Uwe, 8192 Glattfelden (CH); Burow, Simon, 73441 Bopfingen (DE); Köhler, Wolfgang, 73760 Ostfildern (DE)
(74) Representative: ABB Patent Attorneys

(57) **Abstract**

Method and device for attenuating high voltage very fast transients so as to provide a compact and simple built-up of the device.

## Description

### Field of the invention

The present invention relates to a very fast transient overvoltage attenuator, and in particular to a high voltage very fast transient overvoltage (VFTO) attenuator for reducing very fast transients or impact of very fast transients.

### Background of the invention

Electromagnetic transients (EMTs) appear in power generation and distribution systems as an inevitable consequence of switching, faults, or any other sudden topological change of the network. These transients generally have non-harmonic time dependence which, in superposition with the harmonic nominal voltage, produces hazardous voltage peaks. The amplitude and frequency ranges of EMTs depend mainly on the rated voltage and the local network configuration. According to the existing standards for high voltage (HV) equipment, the ratio between the lightning impulse withstand voltage (LIWV) and rated voltage level decreases with higher rated voltage. As an illustration the gas insulated switchgear (GIS) standard IEC 62271-203, "High-Voltage Switchgear and Controlgear", International Electrotechnical Commission, Geneva, Switzerland, 2003 gives the following ULIWV/URATED ratios: 1050kV/245kV∼4.3, and 2500kV/1100kV ∼ 2.3. At the same time, the VFTO peaks in GIS remain 2 - 3 times higher than the rated voltage. Therefore, at a certain rated voltage level the electromagnetic transients become relevant for the dielectric design. Due to larger clearance distances, high-voltage (HV) and ultra-high-voltage (UHV) devices and components have lower lumped and distributed electric capacitances. The corresponding electromagnetic transients cover higher frequencies and they are therefore called the Very Fast Transients (VFTs) or Very Fast Front Transients (VFFT). Causes for VFTs can be faults in GIS (in the frequency range of 100 kHz -1 GHz), lightning surges and faults in substations (10 kHz - 3 MHz), and multiple re-strikes of circuit breakers and disconnectors (10 kHz - 1 GHz). It is desired to damp the VFTs, mostly associated with the disconnector switching (multiple re-strikes and multiple pre-strikes).

Very fast transient over-voltages (VFTO, also referred to as very fast front over-voltages VFFO) are of paramount importance for the dielectric design of high voltage and ultra high voltage devices. The damping of VFTs in UHV gas insulated switchgears by using resistor-fitted disconnectors was reported in Y. Yamagata, K. Tanaka, S. Nishiwaki, "Suppression of VFT in 1100kV GIS by Adopting Resistor-fitted Disconnector", IEEE Transactions on Power Delivery, Vol. 11, No. 2, pp. 872 - 880, 1996. The achieved damping efficiency was rather high, but this solution is very costly and makes the dielectric and mechanical design of the disconnector much more demanding. As an alternative, the VFT damping solution utilizing ferrite rings has also been analyzed and tested, as described in W. D. Liu, L. J. Jin, J. L. Qian, "Simulation Test of Suppressing VFT in GIS by Ferrite Rings", in Proceedings of 2001 International Symposium on Electrical Insulating Materials, pp. 245-247, 2001. The measurements show that the damping effect can be achieved, but with an important drawback, namely that the magnetic material goes easily into saturation, which complicates the design and reduces its generality and robustness. EP 2 234 232 A2 and the corresponding US 2010/0246085 describe a device for damping of very fast transients in GIS. One idea was to use the existing metallic shells of the GIS conductor joints in order to ignite a spark that will partially dissipate the VFT energy.

### Summary of the invention

The present invention provides a method for damping or attenuating high voltage very fast transient overvoltages, a high voltage very fast transient overvoltage attenuator, and a high voltage switchgear component having a high voltage very fast transient overvoltage attenuator according to the subject-matter of the independent claims. Further embodiments are incorporated in the dependent claims.

It should be noted that in the following described exemplary embodiments of the invention apply also for the method and the device.

According to an embodiment of the invention, a method for dumping high voltage very fast transient overvoltage by an attenuator comprises providing a surge arrestor and a coil, the surge arrestor and the coil being electrically connected in parallel so as to form an attenuator, letting a high voltage very fast transient overvoltage enter the attenuator, generating a potential difference over the attenuator by allowing the high voltage very fast transient overvoltage to enter and to leave the coil, and transforming at least a portion of an electric energy of the high voltage very fast transient overvoltage into thermal energy by applying said potential difference to the surge arrestor and letting the surge arrestor reduced said potential difference.

Thus, very fast transients occurring in high voltage switchgears may be eliminated, or at least the impact thereof may be reduced. The very fast transient overvoltage has a high current difference over a time difference di/dt. The very fast transient overvoltage enters the coil, so that the large di/dt generates a respective voltage drop over the coil. In other words, the coil transforms the high di/dt into a high voltage difference over a time difference du/dt. The resulting high voltage or overvoltage is applied to the surge arrestor components, so that the surge arrestor ignites and reduces its internal resistance. This leads to an elimination of the voltage drop and transformation of the electric energy of the very fast transient overvoltage into thermal energy. Thus, the high electric energy of the very fast transients will be converted into thermal energy, which may easier be handled in high voltage switchgears.

According to an exemplary embodiment of the invention, a high voltage very fast transient overvoltage attenuator comprises a first fitting, a second fitting, a surge arrestor having a first arrestor terminal and a second arrestor terminal, and a coil arrangement having a first coil terminal and a second coil terminal, wherein the first arrestor terminal and the first coil terminal are connected to the first fitting and the second arrestor terminal and the second coil terminal are connected to the second fitting.

Thus, the high voltage very fast transient overvoltage attenuator, in the following simply denoted as "attenuator", defines a general terminal in form of a first fitting or a second terminal in form of the second fitting. The attenuator may be implemented within a high voltage switchgear. In particular the attenuator may be implemented in a current conductor. In case a very fast transient overvoltage, in the following denoted as VFTO, enters the attenuator, the VFTO generates a large voltage drop over the coil arrangement. As the voltage drop occurs between the first fitting and the second fitting, it is guaranteed that the voltage drop also applies to the surge arrestor, also being connected between the first fitting and the second fitting, so that a voltage drop over the surge arrestor can result in an ignition of the surge arrestor. Subsequently, the surge arrestor significantly reduces the internal resistance, so that the voltage drop is eliminated, or at least significantly reduced. The surge arrestor converts the voltage drop into a thermal energy owing to the internal resistance of the surge arrestor. As the voltage drop over the properly chosen surge arrestor is limited in case of ignition to low values compared to the expected VFTO, the VFTO values are considerably lowered, with the effect of having a significantly reduced impact on the high voltage switchgear components. It should be noted that the surge arrestor and the coil arrangement may be dimensioned so as to operate and ignite only at very fast transient overvoltage, whereas the surge arrestor does not ignite on nominal currents. The coil arrangement may be dimensioned to carry the nominal current of the current conductor, which means that the coil arrangement has a low ohmic resistance and also a low inductivity for nominal current frequencies. In other words, for nominal currents and frequencies of, for example, 50 or 60 Hertz (Hz), the surge arrestor remains substantially passive and the coil arrangement substantially operates as a current conductor.

According to an exemplary embodiment of the invention, the coil arrangement comprises a first coil being wound around the surge arrestor.

Thus, it is possible to provide a compact design of the attenuator, as the surge arrestor may be arranged within the wound coil. As the first coil may have a diameter which is in a similar dimension as a current conductor usually used in switchgears, the surge arrestor may be arranged within the coil arrangement, so that the outer diameter of the attenuator may be in the same dimension as the current conductor of the switchgear. The attenuator therefore may be implemented without the need for changing the housing dimensions of a switchgear.

According to an exemplary embodiment of the invention, the coil arrangement comprises a second coil, wherein the second coil is arranged beside the surge arrestor.

Thus, the surge arrestor can be designed as a separate element so as to provide a modular system of a coil arrangement and the surge arrestor. In particular, when using a surge arrestor arrangement having a larger diameter, the coil arrangement does not have to be enlarged over a diameter corresponding to that of a current conductor of a switchgear. It should be noted that an arrangement beside to one another includes a parallel arrangement with or without a distance between the coil and the arrestor.

According to an exemplary embodiment of the invention, the surge arrestor has a longitudinal extension, wherein the first coil is wound around the longitudinal extension of the surge arrestor.

Thus, it is possible to adapt the length and diameter of the surge arrestor to the length and diameter of the first coil so as to design a compact attenuator. It should be noted that the surge arrestor may be of a similar length as the first coil and may be arranged concentrically to the wound first coil. The longitudinal extension defines the longitudinal axis.

According to an exemplary embodiment of the invention, the surge arrestor comprises stacked metal oxide arrestor elements.

Thus, it is possible to built-up a modular arrestor according to the requirements and according to the expected VFTO's. The stacked arrestor elements allow variable built-up of the arrestor as well as a longitudinal extension thereof.

According to an exemplary embodiment of the invention, the coil arrangement comprises a metal tubular element having a first end and a second end as well as a slit, wherein the slit extends from the inside to the outside of the metal tubular element and extends from the first end along a generally helical track to the second end of the metal tubular element, so as to form a coil conductor beside the slit.

Thus, a large cross-section of the current path can be provided, as, for example, the cross-section is not limited to a diameter of wire, but may be designed with a thickness of the wall of the tubular element and a width, which is a plural times broader than the thickness. As a manufacturing basis for the metal tubular element, a current conductor often used in a high voltage switchgear may be used, having e.g. a machine-cutted slit along a helical path. It should be understood that the inductivity is the relevant property of the tubular element. It should be noted that also a stepped slit should be considered as a generally helical path, as long as the slit geometry increases the inductivity over an non-slit metal tubular element.

According to an exemplary embodiment of the invention, the slit ends distantly from an edge of the respective end of the metal tubular element so that the respective end forms an annular ring.

Thus, it is possible to easily mount the metal tubular element with the respective annular rings at the ends to a respective terminal of a current conductor of a switchgear. Further, the entire stability of the tubular element increases when maintaining annular rings at the respective ends. It should be noted, that also consecutive slits may be used so as to form annular rings not only at the respective ends of the tubular element, but also in sections between the ends. This may be of value for stabilizing the attenuator geometry. When providing shorter slits, in particular, when not extending along an entire perimeter, a manufacturing process may be simplified. Shorter slits may, for example, be manufactured by a sawing process instead of a machine-cutting or milling process.

According to an exemplary embodiment of the invention, the metal tubular element is made of an aluminum or aluminum alloy tube having a screw thread-like through-slit with a constant pitch.

Aluminum or aluminum alloy has a low weight, but a sufficient conductivity for high current levels at a low material prize. Aluminum alloy may have desired properties with respect to stability. A constant pitch results in a constant voltage drop over the tubular element as a coil. It should be noted that the pitch also may vary over the length, in case it is desired to control a current drop distribution over the length of the metal tubular element.

According to an exemplary embodiment of the invention, the metal tubular element has a plurality of slits so as to form a plurality of parallel coil conductors.

Thus, parallel current paths may be provided. The helical slits may also have the property of equalizing thermally caused length extensions of a current conductor, in particular, when heating-up a current conductor owing to high nominal currents. The spiral like form may thus provide resilience like a spring, allowing to compensate length extensions.

According to an exemplary embodiment of the invention, a slit edge along a coil conductor is rounded so as to have substantially constant field strength along the circumference of the metal tubular element.

Thus, sharp edges of the slits do not increase the field strength between the tubular element and a possible housing of the attenuator. It should be understood, that the rounded edge is in particular the edge of the tubular element facing the electrical counter pole. A rounded edge may also include particular profiles, as a Rogowsky-profile , so that the electric field strength may be kept almost constant over the longitudinal extension of the tubular element.

According to an exemplary embodiment of the invention, the surge arrestor comprises a structure formed by a varistor material filling of the slit.

By filling the slit by varistor material, which may also be used for the stacked arrestor elements, the inner portion of the coil arrangement, for example the slit tubular element, may be used for other purposes. The arrestor then is formed by the slit filling varistor material. Further, the stability of the slit tubular may be increased, as the varistor material filling may stabilize the slit structure, which may be of particular relevance when having a low pitch resulting in a small width of the conductor tracks.

According to an exemplary embodiment of the invention, the coil arrangement comprises a wire wound around an isolating tube, wherein the surge arrestor is longitudinally arranged within the isolating tube.

Thus, the coil arrangement may be manufactured by using simple basic devices, as an isolating tube and wire, so that, for example, a machine-cutting process may be avoided. Further, it is possible to easy modify the electrical properties of the coil arrangement, as the winding process may easily be modified, in particular, when applying a variable number of windings of the wire around the isolating tube. The isolated tube may also be used as a support structure for secondary elements, like for example supporting the arrestor or arrestor components, or for example core elements increasing the inductivity of the coil arrangement.

According to an exemplary embodiment of the invention, the surge arrestor comprises a structure being formed by a varistor material coating on at least one of the inside and the outside of the isolating tube.

Thus, it is possible to use the isolating tube as a support structure for a varistor material for the surge arrestor as well as for a coil arrangement. It should be understood, that, for example, a varistor material coating may be provided at the inside of the isolating tube, whereas the coil may be wound around the outer side of the isolating tube. However, a coil may also be wound along the inner surface of the isolating tube, and the varistor material coating may be provided at the outer surface of the isolating tube. The latter alternative may result in an arrangement having a more equalized electric field with respect to an outer housing and couter pole of the attenuator, as the coil is circumferenced by a varistor coating and the coil has a smaller diameter. It should be noted that the varistor coating may also be implemented as an internal layer within the wall of the isolating tubular element, and that also the wire may be implemented within a wall of the isolating tube.

According to an exemplary embodiment of the invention, the coil arrangement comprises a core portion within at least one coil of the coil arrangement.

Thus, the inductivity of the coil may be increased. It should be noted, that the core portion may be designed as a tubular core portion allowing a surge arrestor to be arranged inside the tubular core arrangement. As an alternative, the core portion may be designed as a solid core material rod, in particular, when providing the surge arrestor as, for example, a coating on an isolating tube or in form of a tubular element. It should be noted, that also particular stripes of core material may be provided in a longitudinal extension of the attenuator within a coil. The core material or core portion does not have to be a symmetric design with respect to the cross-section of the attenuator.

According to an exemplary embodiment of the invention, the high voltage very fast transient overvoltage attenuator further comprises a tubular housing having a first end and a second end, wherein the tubular housing comprises a first insulator support body at the first end and a second insulator support body at the second end, wherein the first insulator support body receives the first fitting and the second insulator support body receives the second fitting, wherein the tubular housing is fillable with an insulating gas.

Thus, the attenuator may be designed as a standard component for switchgears, wherein in particular the first end and the second end may be designed as standard interfaces to be coupled to respective contacts of a high voltage switchgear. By providing the insulator support bodies, it is possible to pre-manufacture the attenuator with a defined geometry of the attenuator including housing and to provide the attenuator as a module for switchgears. In particular, such an attenuator with a tubular housing can be easily exchanged during maintenance owing to the modular structure. It should be noted, that as an insulating gas for example sulphur-hexafluoride may be used as well as compressed air or other gases having particular isolation properties of high voltage applications.

It should be noted that the above features may also be combined. The combination of the features may also lead to synergetic effects, even if not explicitly described in detail.

These and other aspects of the present invention will become apparent from and elucidated with reference to the embodiments as described hereinafter.

### Brief description of the drawings

Exemplary embodiments of the present invention will be described in the following with reference to the following drawings.
- Figure 1: illustrates a high voltage very fast transient overvoltage attenuator according to an exemplary embodiment of the invention, wherein a coil is wound around a surge arrestor.
- Figure 2: illustrates a further exemplary embodiment of the invention, wherein a coil arrangement is arranged beside a surge arrestor component.
- Figure 3: illustrates a further exemplary embodiment of the invention, wherein a surge arrestor is designed as a coating on a support tube.
- Figure 4: illustrates a further exemplary embodiment of the invention, wherein the coil arrangement is realized by a metal tubular element having slit(s) along a helical path.
- Figure 5: illustrates a cross-sectional view along a longitudinal extension of the attenuator.
- Figure 6: illustrates an attenuator being arranged within a tubular housing according to an exemplary embodiment of the invention.

### Detailed description of exemplary embodiments

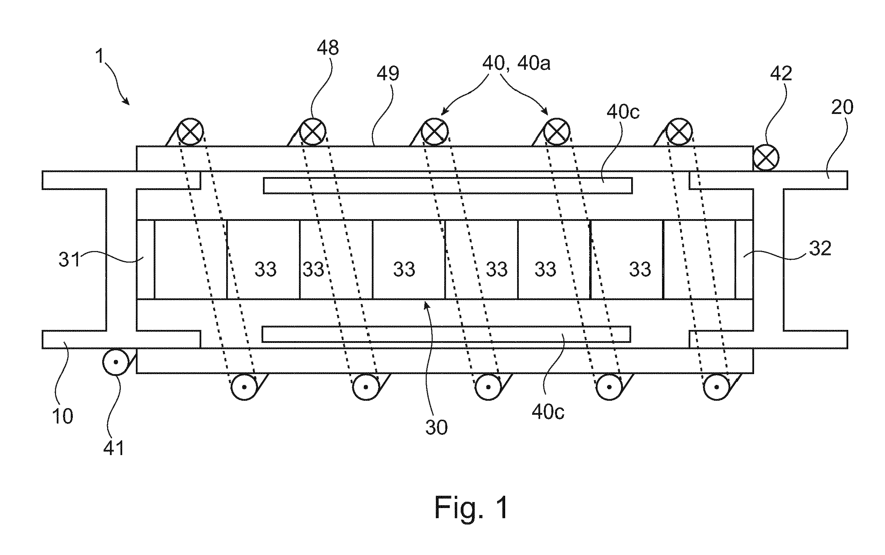

Figure 1 illustrates a high voltage very fast transient overvoltage attenuator according to an exemplary embodiment of the invention. The embodiment as illustrated in Figure 1 comprises a first fitting 10 and a second fitting 20. The fittings may be used for connecting further elements of the high voltage very fast transient overvoltage attenuator, in the following denoted as attenuator, and thus, may be used as a support structure. Further, the first and the second fitting 10, 20 may be used for connecting the attenuator electrically to other components of, for example, a switchgear. The attenuator 1 further comprises a surge arrestor arrangement 30, which surge arrestor arrangement 30 has a first arrestor terminal 31 and a second arrestor terminal 32. The first arrestor terminal 31 is connected to the first fitting 10, wherein the second arrestor terminal 32 is connected to the second fitting 20. In addition, the attenuator of Figure 1 further comprises a coil arrangement 40 having a first coil terminal 41 and a second coil terminal 42. The first coil terminal 41 is connected to the first fitting 10 and the second coil terminal 42 is connected to the second fitting 20. The embodiment of Figure 1 illustrates an attenuator, where the coil arrangement 40 comprises a wound coil 40a, having windings of a coil wire 48. One end of the coil wire 48 is connected to the first fitting 10 as the first coil terminal 41 and the second end of the wire 48 is connected to the second fitting 20 as second coil terminal 42. The embodiment of Figure 1 illustrates a tubular element 49 serving as a support structure for the coil winding 48. The support structure may be an isolating tube which may be fixedly connected to the first and the second fitting 10, 20. The connection of the support tube 49 to the fitting may be achieved by an adhesive, a press-fitting, a screw connection (not illustrated) or any other mechanical connection between the support tube 49 and the first and second fitting 10, 20. The embodiment of Figure 1 illustrates that the surge arrestor arrangement 30 is arranged within the coil 40, 40a. The surge arrestor arrangement comprises a plurality of surge arrestor elements 33. The surge arrestor elements 33 may be for example metal oxide arrestor elements. The arrestor elements may be arranged in a stacked line. It should be noted that also alternative embodiments are possible, for example an unstacked material varistor rod being connected to the first fitting 10 and the second fitting 20. Figure 1 further illustrates the provision of a core material portion 40c, wherein the core material portion is arranged within the coil 40, 40a so as to increase the inductivity of the coil. It should be noted that the core portion 40c may be of any material being capable of increasing the inductivity of the coil 40a. The core material portion 40c may be, for example, a tubular portion, as shown in Figure 1. Alternatively, a core portion may be, for example, a full material element, in particular when providing the arrestor in, for example, a tubular form or coating allowing to receiving the core portion 40c in the longitudinal center opening of the tubular arrestor element. As a further alternative, the core portion may be of any form being suitable for being positioned in a free space within the coil winding. In case of a conductive core material the insulation distances should be considered. In case of non-conductive core material, like ferrites, the isolation properties may be used as a structure.

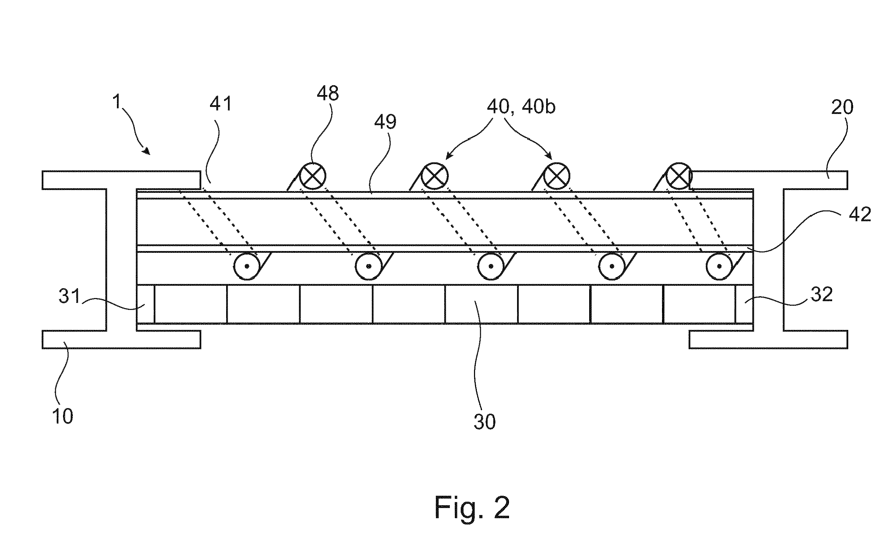

Figure 2 illustrates an alternative embodiment of the present invention, wherein the coil arrangement comprises a second coil 40b. The arrangement of Figure 2 is an attenuator, where the surge arrestor arrangement 30 is no longer provided within the coil arrangement 40, in particular within the second coil 40b. This arrangement may be relevant for purposes where the surge arrestor element 30 for example may not be arranged within the coil. Nevertheless, the surge arrestor 30 has a first arrestor terminal 31 and a second arrestor terminal 32, and the coil arrangement 40 has a first coil terminal 41 and a second coil terminal 42. The first arrestor terminal 31 and the first coil terminal 41 are connected to the first fitting 10, wherein the second arrestor terminal 32 and the second coil terminal 42 are connected to the second fitting 20. The second coil 40b does not exclude the first coil 40a. The functional principle of Figure 1 and Figure 2 is similar, as it will be described in the following.

A very fast transient overvoltage, in the following denoted as VFTO, in particular a high voltage VFTO, for example enters the attenuator from the first fitting 10. The high current slope di/dt enters the coil arrangement 40, 40a, 40b and results in a significant voltage drop between the second fitting 20 and the first fitting 10. As the surge arrestor 30 is also connected between the first fitting and the second fitting, the high voltage drop results in an ignition of the surge arrestor 30, so that the internal resistance of the surge arrestor 30 significantly decreases and limits the voltage drop. Thus, electrical energy of the VFTO is transferred or converted into thermal energy, which may be handled much more easily within a switchgear. It should be noted that the VFTO may also enter the attenuator 1 from the side of the second fitting 20, wherein the effect is the same as described before. The arrangement according to Figure 1 may be relevant for purposes of a space saving requirement, wherein the arrangement of Figure 2 may be of relevance for an easier assembling or disassembling.

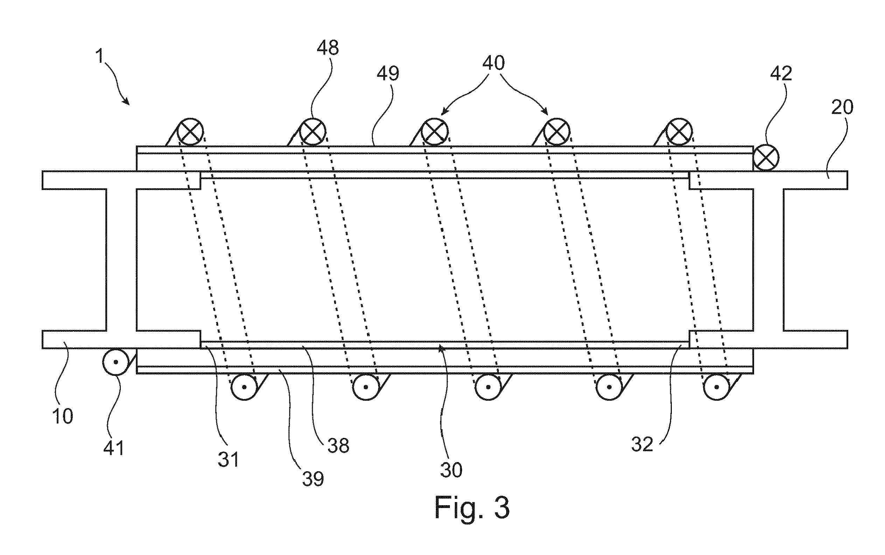

Figure 3 illustrates a further exemplary embodiment of the invention, wherein the attenuator comprises a first fitting 10 and a second fitting 20, wherein both fittings 10, 20 are mechanically connected by a tubular element 49, in particular an isolating tube. The isolating tube may serve as a support structure for the coil arrangement 40, wherein a coil of the coil arrangement 40 with the first end 41 is connected to the first fitting 10 and with the second end 42 is connected to the second fitting 20. The surge arrestor 30 may be realized by a coating of a surge arrestor material, in particular a varistor material. The varistor material may be coated on the inside as an inner layer 38 or/and on an outer surface of the tubular element 49 as an outer surface coating 39. Even if not explicitly illustrated in Figure 3, the surge arrestor material of the layer 38 and/or 39 may be connected to the respective fittings 10, 20. When providing the surge arrestor 30 by a coating on a carrier tube 49, the inner portion of the tube may be free so that further components may be arranged within the tube.

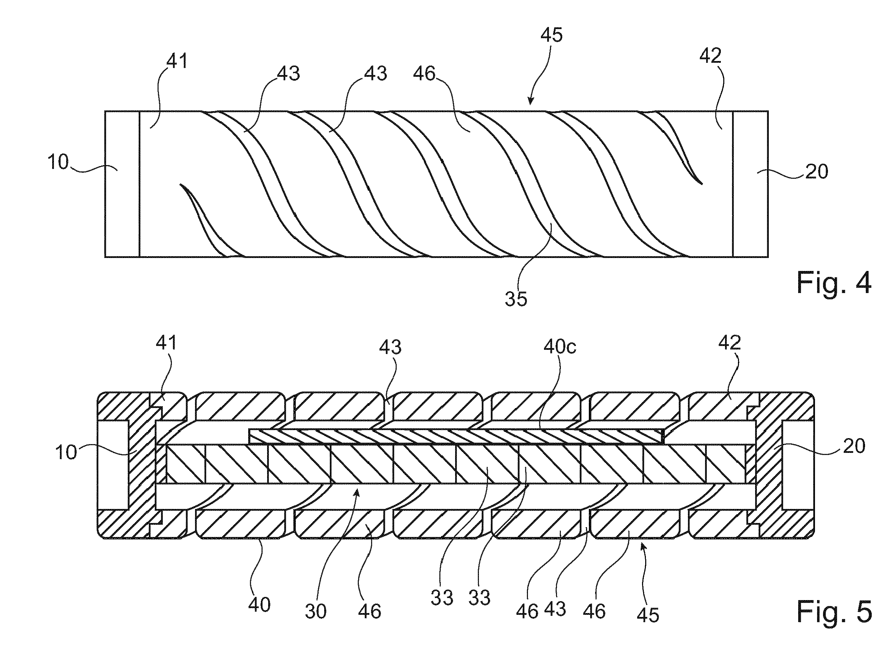

Figure 4 illustrates a further exemplary embodiment of the invention, wherein the attenuator illustrated in Figure 4 comprises a coil arrangement 40 having a coil being formed by a slit metal tubular element 45. The metal tubular element 45 will be provided with slits 43 so as to form a slit along a helical path of the metal tubular element. The slits 43 may terminate distantly from an end edge of the metal tubular element 45 so as to form annular rings at the end of the metal tubular element serving as a first coil terminal 41 and a second coil terminal 42. The slit along a helical path forms a conductor track 46 resulting in a helical path of a conductor so as to form a coil. Such an arrangement has an inductivity representing the characteristics of a coil. It should be noted that a single helical slit track may be provided as well as a plurality of helical slit paths so as to form parallel conductive tracks 46. The pitch of the slit(s) 43 and the cross-sectional dimension of the conductor path(s) 46 may be adapted according to the required inductivity of the coil formed by the slit metal tubular element 45. The slits 43 may be filled with a surge arrestor material, such like a varistor material, for example metal oxide surge arrestor material. In addition, or alternatively, the attenuator may comprise a surge arrestor 30 being arranged within the metal tubular element, which, however, is not illustrated in Figure 4.

Figure 5 illustrates a further exemplary embodiment of the invention. The embodiment illustrated in Figure 5 is similar to that illustrated in Figure 4, however, may differ with respect to particular features. The attenuator illustrated in Figure 5 comprises a first fitting 10 and a second fitting 20 as well as a coil arrangement 40 in form of a metal tubular element 45 having formed a slit 43 therein along a helical path from the first fitting 10 to the second fitting 20. The portions of the metal tubular element 45 beside the slit 43 form a conductive track 46 so as to form a coil arrangement 40. Figure 5 illustrates a surge arrestor within the metal tubular element. The surge arrestor 30 is connected to the first fitting 10 and the second fitting 20 and here comprises a plurality of arrestor elements 33. Further, Figure 5 illustrates a core portion 40c, wherein the core portion may result in an increased inductivity of the coil arrangement 40. As can be seen in Figure 5, the core portion 40c does not have to be symmetrical, and may be formed by a single strip. As an alternative, which however is not illustrated in Figure 5, but similarly illustrated in Figure 1, the core portion may be formed by a tubular core element 40c. Even if not explicitly illustrated in Figure 5, the slit(s) 43 may alternatively or additionally filled with a varistor material as described with respect to Figure 4.

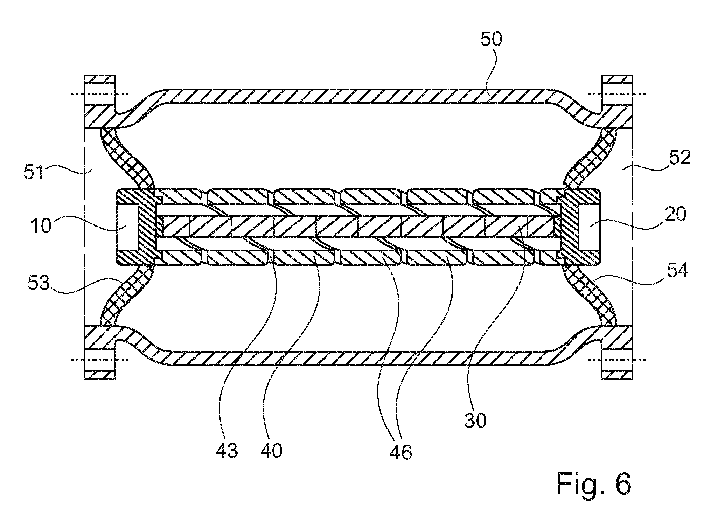

Figure 6 illustrates a high voltage very fast transient overvoltage attenuator, which further comprises a tubular housing 50. The above described elements are arranged within a tubular housing 50 so as to form a unit. In order to maintain the isolating distance between the tubular housing as a counter pole, which may be formed by a metal tube, the attenuator as described above is supported by insulator support bodies 53, 54. The first insulator support body 53 is arranged at a first end 51 of the tubular housing 50, wherein the second insulator support body 54 is arranged at the second end 52 of the tubular housing 50. Thus, the attenuator with housing may be used as a component which may be mounted within a gas insulating switchgear. The tubular housing may be filled with an isolating gas, like for example sulphur-hexafluoride, compressed air, or any other suitable isolating gas. The insulated support bodies 53, 54 may form a hermetic gas barrier together with the first fitting 10 and the second fitting 20, so that the attenuator as illustrated in Figure 6 may be pre-manufactured including an isolating gas filling. As an alternative, either the fittings and/or the insulating support bodies may be perforated, so that a later filling of an isolating gas is possible. It should be noted, that the above described attenuator may be used for gas insulated switchgears as well as air insulated switchgears. When using the attenuator in a gas insulated switchgear, an embodiment may be used which is described with respect to Figure 6.

It should be noted, that the entire attenuator may be casted into a mould housing, so that the attenuator may also be used in open air switchgear arrangements. Further, it should be understood, that high voltage may be a voltage which is 1000 Volts (V) or higher, in particular any voltage level, where very fast transient processes are of relevance. Further it should be noted, that the orientation of the helical slits may be involve directions, clockwise or counter-clockwise. Further it should be noted, that the surge arrestor 30 also may be replaced by elements like a spark gap or may be supplemented by such elements. Further it should be noted, that the surge arrestor may be controlled, in particular to control the ignition characteristics of the surge arrestor. Further it should be noted, that, when providing a plurality of slits, the slits may have different pitches. In addition or alternatively, the pitch of a single slit may vary along the length of the metal tubular element. It should be noted, that the attenuator may be used for protecting a transformer, a generator, a power switch or a substation, or parts thereof. In particular, the attenuator may be used for protecting elements in a power distribution and transmission system, in particular a power distribution and transmission system of a high voltage level. It should be noted, that high voltage includes every power level of 1000 V and higher.

It should be noted, that the term "comprising" does not exclude other elements or steps and the "a" or "an" does not exclude a plurality. Also elements described in association with different embodiments may be combined.

It should be noted, that the reference signs in the claims shall not be construed as limiting the scope of the claims.

### Reference list:

- 1: high voltage very fast transient overvoltage attenuator
- 10: a first fitting
- 20: a second fitting
- 30: a surge arrestor
- 31: first arrestor terminal
- 32: second arrestor terminal
- 33: arrestor elements
- 35: varistor material filling
- 38: inner varistor material coating
- 39: outer varistor material coating
- 40: coil arrangement
- 40a: first coil
- 40b: second coil
- 40c: core portion
- 41: first coil arrangement terminal/first end
- 42: second coil arrangement terminal/second end
- 43: slit
- 44: slit edge
- 45: metal tubular element
- 46: coil conductor
- 48: coil wire
- 49: isolating tube
- 50: tubular housing
- 51: first end of tubular housing
- 52: second end of tubular housing
- 53: first insulator support body
- 54: second insulator support body

## Claims

1. Method for damping high voltage very fast transient overvoltage by an attenuator, the method comprises:
providing a surge arrestor and a coil, the surge arrestor and the coil being electrically connected in parallel so as to form an attenuator,
letting a high voltage very fast transient overvoltage enter the attenuator,
generating a potential difference over the attenuator by allowing the high voltage very fast transient overvoltage to enter and leave the coil,
transforming at least a portion of an electric energy of the high voltage very fast transient overvoltage into thermal energy by applying said potential difference to the surge arrestor and letting the surge arrestor reduce said potential difference.

2. High voltage very fast transient overvoltage attenuator, comprising
a first fitting (10),
a second fitting (20),
a surge arrestor (30) having a first arrestor terminal (31) and a second arrestor terminal (32),
a coil arrangement (40) having a first coil terminal (41) and a second coil terminal (42),
wherein the first arrestor terminal and the first coil terminal are connected to the first fitting and the second arrestor terminal and the second coil terminal are connected to the second fitting.

3. High voltage very fast transient overvoltage attenuator according to claim 2, wherein the coil arrangement (40) comprises a first coil (40a), the first coil is wound around the surge arrestor (30).

4. High voltage Very Fast Transients overvoltage attenuator according to any one of claims 2 and 3, wherein the coil arrangement (40) comprises a second coil (40b), the second coil (40b) is arranged beside the surge arrestor (30).

5. High voltage very fast transient overvoltage attenuator according to any one of claims 2 to 4, wherein the surge arrestor (30) has a longitudinal extension, wherein the first coil (40a) is wound around the longitudinal extension of the surge arrestor.

6. High voltage very fast transient overvoltage attenuator according to any one of claims 2 to 5, wherein the surge arrestor (30) comprises stacked metal oxide arrestor elements (33).

7. High voltage very fast transient overvoltage attenuator according to any one of claims 2 to 6, wherein the coil arrangement (40) comprises a metal tubular element (45) having a first end (41), a second end (42) and at least one slit (43), wherein the slit extends from the inside to the outside of the metal tubular element, and extends from the first end along a generally helical path to the second end, so as to form a coil conductor (46) beside the slit.

8. High voltage very fast transient overvoltage attenuator according to claim 7, wherein the slit (43) ends distantly from an edge of the respective end (41, 42) of the metal tubular element (45) so that the respective end forms an annular ring.

9. High voltage very fast transient overvoltage attenuator according to any one of claims 7 and 8, wherein the metal tubular element (45) is made of an aluminum or aluminum alloy tube having a screw thread like through slit (43) with a constant pitch.

10. High voltage very fast transient overvoltage attenuator according to any one of claims 7 to 9, wherein the metal tubular element (45) has a plurality of slits (43) so as to form a plurality of parallel coil conductors (46).

11. High voltage very fast transient overvoltage attenuator according to any one of claims 7 to 10, wherein a slit edge (44) along a coil conductor (46) is rounded so as to have a substantially constant field strength along the circumference of the metal tubular element (45).

12. High voltage very fast transient overvoltage attenuator according to any one of claims 7 to 11, wherein the surge arrestor (30) comprises a structure formed by a varistor material filling (35) of the slit (43).

13. High voltage very fast transient overvoltage attenuator according to any one of claims 2 to 12, wherein the coil arrangement (40) comprises a wire (48) wound around an isolating tube (49), wherein the surge arrestor (30) is longitudinally arranged within the isolating tube.

14. High voltage very fast transient overvoltage attenuator according to claim 13, wherein the surge arrestor (30) comprises a structure being formed by a varistor material coating (38, 39) on at least one of the inside and the outside of the isolating tube (49).

15. High voltage very fast transient overvoltage attenuator according to any one of claims 2 to 14, wherein the coil arrangement (40) comprises a core portion (40c) within at least one coil (40a, 40b) of the coil arrangement.

16. High voltage very fast transient overvoltage attenuator according to any one of claims 2 to 15, further comprising a tubular housing (50) having a first end (51) and a second end (52), wherein the tubular housing comprises a first insulator support body (53) at the first end and a second insulator support body (54) at the second end, wherein the first insulator support body receives the first fitting (10) and the second insulator support body receives the second fitting (20), wherein the tubular housing is fillable with an insulating gas.
